# EUROPEAN PATENT APPLICATION

(11) **EP 2 343 655 A1**
(43) Date of publication of application: **13.07.2011**
(21) Application number: 08877159.7
(22) Date of filing: 02.10.2008
(51) Int. Cl.: G06F 12/08

(54) **MEMORY ACCESS METHOD AND INFORMATION PROCESSING APPARATUS**

(71) Applicant: Fujitsu Limited, Kawasaki-shi, Kanagawa 211-8588 (JP)
(72) Inventor: UKAI, Masaki, Kawasaki-shi Kanagawa 211-8588 (JP); UNNO, Hideyuki, Kawasaki-shi Kanagawa 211-8588 (JP); YOKOI, Megumi, Kawasaki-shi Kanagawa 211-8588 (JP)
(74) Representative: Holz, Ulrike
(86) International application number: PCT/JP2008/067940
(87) International publication number: WO 2010/038301

(57) **Abstract**

In a memory access method to maintain data consistency in an information processing apparatus in which a nodes are coupled, wherein each node includes a processor, a main memory, and a secondary memory, takeout information indicating that data of the node is taken out to the secondary memory of another node is stored in a directory of each node. When a cache miss occurs during a memory access to the secondary memory of one node, the one node judges whether a destination of the memory access is the main memory or the secondary memory of the one node. If the destination of the memory access is judged to be the main memory or the secondary memory of the one node, the one node judges whether a directory hit occurs by indexing and retrieving the directory thereof, and if no directory hit occurs, a memory access is performed by the one node based on the memory access. If the one node judges that the destination of the memory access is not the main memory nor the secondary memory of the one node or, that the directory hit occurs, a global snoop process to make a snoop with respect to all of the plurality of nodes is performed, with respect to the other nodes based on the memory access.

## Description

### TECHNICAL FIELD

The present invention generally relates to memory access methods and information processing apparatuses, and more particularly to a memory access method and an information processing apparatus that maintains cache coherency (data consistency in cache memory).

### BACKGROUND ART

A multi-processor system including a plurality of processors (for example, CPUs (Central Processing Units) is an example of an information processing apparatus including a plurality of processors or processing units. In the multi-processor system, the cache coherency of memories formed by storage units and cache memories as a whole is maintained according to SMP (Symmetric Multi Processing) or ccNUMA (cache coherent NonUniform Memory Access).

As the number of processors increases, the global snoop (a snoop with respect to all cache memories within the system) becomes the performance-controlling condition in the case of the SMP, and it is difficult to further improve the performance. In the case of the SMP, the global snoop may be performed at any time, and thus, it is in principle impossible to make a memory access within a time shorter than the latency of the global snoop.

The advantage of the ccNUMA lies in the high-speed access of a local memory. The memory that is directly connected to the processor (for example, CPU) at an access source is referred to as the local memory.

On the other hand, unlike the ccNUMA, the SMP maintains the balance between the latency of the global snoop and the memory access time, even for an access to a remote memory. In other words, when making the access to the remote memory, the SMP does not encounter a considerably increase not inconsistency in the latency of the global snoop, unlike the ccNUMA. The memory that is not directly connected to the CPU at the access source and is connected to another CPU is referred to as the remote memory.

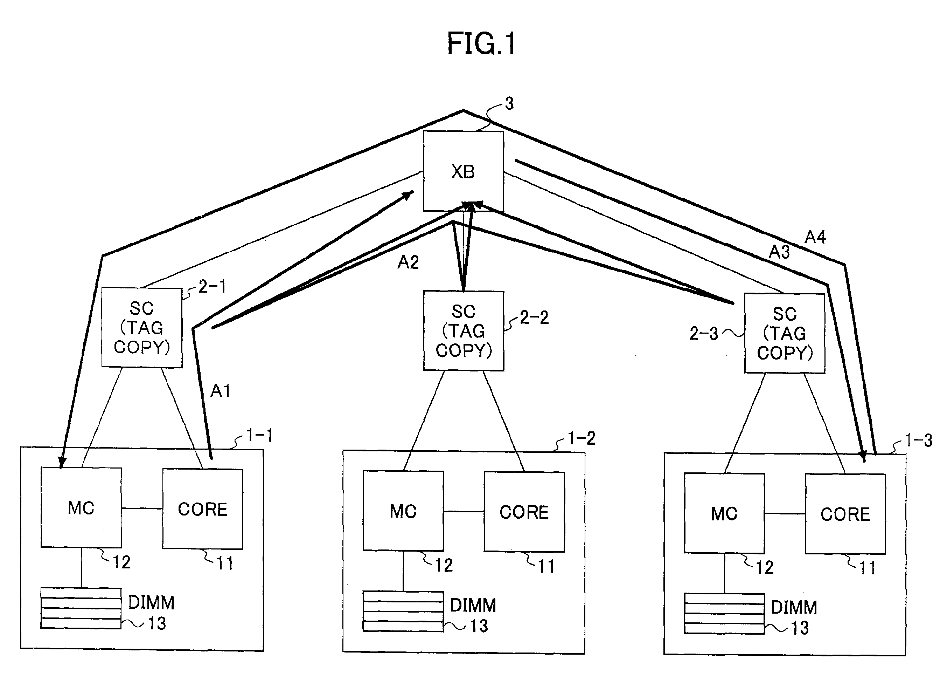

FIG. 1 is a diagram for explaining a copy-back according to the SMP. In a multi-processor system illustrated in FIG. 1, a plurality of nodes 1-1 through 1-3 are coupled to a crossbar (XB) 3 via corresponding system controllers (SCs) 2-1 through 2-3. Each of the nodes 1-1 through 1-3 includes a core 11 that is provided with a processor such as a CPU and a cache, a memory controller (MC) 12, and a main memory (DIMM: Dual Inline Memory Module) 13. It is assumed for the sake of convenience that the node 1-1 forms a local node, and the node 1-3 forms an owner node that saves data of a cache miss.

In FIG. 1, the local node 1-1 in which the cache miss occurs requests the data of the cache miss to the system controller 2-1, as indicated by an arrow A1. The system controller 2-1 broadcasts the data request with respect to the crossbar 3, as indicated by the arrow A1, and the crossbar 3 broadcasts the data request with respect to all of the system controllers 2-1 through 2-3, as indicated by an arrow A2. Each of the system controllers 2-1 through 2-3 simultaneously search a tag copy in order to judge a location of the data of the cache miss, and return a judgement result to the crossbar 3 as indicated by the arrow A2. The crossbar 3 collects the judgement results, and in this example, judges that the data of the cache miss is located in the cache within the core 11 of the owner node 1-3 and requests a copy-back as indicated by an arrow A3. The owner node 1-3 transfers the cache data to the local node 1-1 at the request source. Hence, the transfer route of the data is basically the same regardless of which node becomes the owner node.

Compared to the SMP, the ccNUMA may be more advantageous due to improvements in the software technology. However, a response characteristic of the ccNUMA differs from that of the SMP, and although the access to the local memory may be made with a short latency, the access to the remote memory is slow. For this reason, when the SMP is changed to the ccNUMA, the performance of the multi-processor system may deteriorate depending on the software. Particularly in a case where a transfer between CPU caches, such as the copy-back, frequently occurs, the superiority of the ccNUMA over the SMP fades.

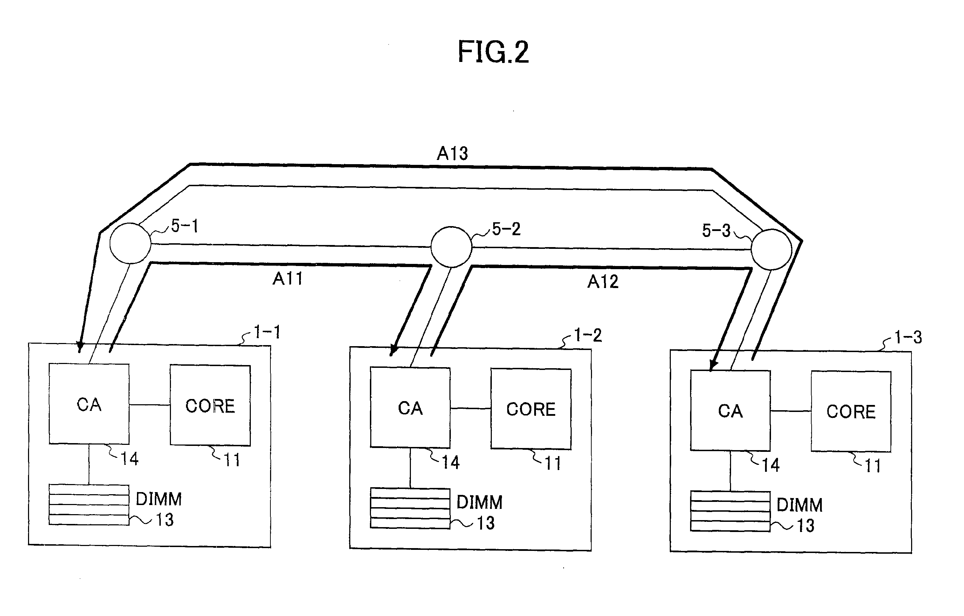

FIG. 2 is a diagram for explaining a copy-back according to the ccNUMA. In FIG. 2, those parts that are the same as those corresponding parts in FIG. 1 are designated by the same reference numerals, and a description thereof will be omitted. Each of the nodes 1-1 through 1-3 is provided with a communication assist (CA) 14. In addition, 5-1 through 5-3 denote control points of routes. It is assumed for the sake of convenience that the node 1-1 forms the local node, the node 1-2 forms a home node that functions as a memory management node, and the node 1-3 forms the owner node that saves the data of the cache miss.

The local node 1-1 in which the cache miss occurs inquires a directory of the home node 1-2 of the location of the requested data, as indicated by an arrow A11. The directory is stored in the DIMM 13. The home node 1-2 searches the directory and recognizes that the requested data is located in the owner node 1-3, and outputs a data transfer instruction with respect to the owner node 1-3, as indicated by an arrow A12. The owner node 1-3 returns the requested data to the local node 1-1 at the data request source, as indicated by an arrow A13.

Additional exchanges, such as maintaining consistency of the directory information, may be performed among the nodes 1-1 through 1-3. But basically, the requested transfer is generated three times with respect to one cache miss, and as a result, it takes time to acquire the requested data. In addition, the number of control points of the routes increases as the number of nodes increases, and each transfer passes through a plurality of control points of the routes, to thereby increase the transfer time. On the other hand, the transfer time is short for the exchange between the local node and the data request source because the data request source is included in the local node, and there is an imbalance in the transfer times within the multi-processor system.

Patent Document 1: Japanese Laid-Open Patent Publication No.11-232173

Patent Document 2: Japanese Laid-Open Patent Publication No.5-100952

Patent Document 3: Japanese Laid-Open Patent Publication No.2005-234854

### PROBLEM TO BE SOLVED BY THE INVENTION

Conventionally, there was a problem in that it is difficult to realize a relatively short latency and a relatively high throughput, regardless of whether the memory that is an access target is a local memory or a remote memory.

Accordingly, it is an object in one aspect of the embodiment to provide a memory access method and an information processing apparatus capable of realizing a relatively short latency and a relatively high throughput, regardless of whether a memory that is an access target is a local memory or a remote memory.

### MEANS FOR SOLVING THE PROBLEM

According to one aspect of the embodiment, there is provided a memory access method to maintain data consistency in an information processing apparatus in which a plurality of nodes are coupled, wherein each node includes a processor, a main memory, and a secondary memory, the memory access method comprising storing takeout information indicating that data of the node is taken out to the secondary memory of another node in a directory of each node; judging by a node whether a destination of the memory access is the main memory or a secondary memory of the node when a cache miss occurs during a memory access to the secondary memory of the node; judging by the node whether a directory hit occurs by indexing and retrieving the directory thereof when the node judges that the destination of the memory access is the main memory or the secondary memory of the node; performing a memory access by the node based on the memory access when the node judges that no directory hit occurs; and performing a global snoop process by the node to make a snoop with respect to all of the plurality of nodes with respect to the other nodes based on the memory access when the node judges that the destination of the memory access is not the main memory nor the secondary memory of the node or when the node judges that the directory hit occurs.

According to another aspect of the embodiment, there is provided an information processing apparatus configured to maintain data consistency, comprising a plurality of nodes each including a processor, a main memory, and a secondary memory; and a memory control unit coupled to the plurality of nodes, wherein each of the plurality of nodes includes a directory configured to store takeout information indicating that data of the node is taken out to the secondary memory of another node, wherein the processor of a node includes a first judging portion configured to judge whether a destination of the memory access is the main memory or the secondary memory of the node when a cache miss occurs during a memory access to the secondary memory of the node; a second judging portion configured to judge whether a directory hit occurs by indexing and retrieving the directory thereof when the one node judges that the destination of the memory access is the main memory or the secondary memory of the one node; an access portion configured to perform a memory access based on the memory access when the second judging portion judges that no directory hit occurs; and a snoop process portion configured to perform a global snoop process to make a snoop with respect to all of the plurality of nodes with respect to the other nodes based on the memory access when the first judging portion judges that the destination of the memory access is not the main memory nor the secondary memory of the one node or, the second judging portion judges that the directory hit occurs.

### EFFECTS OF THE INVENTION

According to the disclosed memory access method and information processing apparatus, a relatively short latency and a relatively high throughput may be realized regardless of whether a memory that is an access target is a local memory or a remote memory.

### BRIEF DESCRIPTION OF THE DRAWINGS

FIG. 1 is a diagram for explaining a copy-back according to the SMP;
FIG. 2 is a diagram for explaining a copy-back according to the ccNUMA;
FIG. 3 is a block diagram illustrating an example of a multi-processor system in an embodiment;
FIG. 4 is a diagram for explaining an example of entries of a tag copy;
FIG. 5 is a diagram for explaining an example of entries of a directory;
FIG. 6 is a flow chart for explaining a memory access control;
FIG. 7 is a flow chart for explaining an example of an operation of the multi-processor system;
FIG. 8 is a flow chart for explaining an example of the operation of each part of the multi-processor system;
FIG. 9 is a diagram for explaining a directory forming method;
FIG. 10 is a diagram for explaining another example of the entries of the directory; and
FIG. 11 is a flow chart for explaining another example of the operation of the multi-processor system.

### DESCRIPTION OF THE REFERENCE NUMERALS

- 21: SC
- 22-1, 22-2, ..., 22-n: Node
- 31: Core
- 32: DIMM

- 41: CPU
- 42: MC
- 43: Cache
- 44: Cache Tag
- 45: Directory
- 51: Tag Copy

### BEST MODE OF CARRYING OUT THE INVENTION

According to one aspect of the embodiment, a memory access is controlled in order to maintain data consistency in an information processing apparatus in which a plurality of nodes are connected, wherein each node includes a processor, a main memory, and a secondary memory. Each node is provided with a directory that stores takeout information indicating that data of the node is taken out to the secondary memory of another node. When a cache miss occurs during a memory access to the secondary memory of one node, the one node judges whether a destination of the memory access is the main memory or the secondary memory of the one node. If it is judged that the destination of the memory access is the main memory or the secondary memory of the one node, the one node indexes and retrieves the directory thereof to judge whether a directory hit occurs. If it is judged that no directory hit occurs, the one node performs the memory access according to the ccNUMA based on the memory access. On the other hand, if it is judged that the destination of the memory access is not the main memory nor the secondary memory of the one node or, if is judged that the directory hit occurs, the one node performs a global snoop process according to the SMP, in which a snoop is made with respect to all of the nodes, with respect to the other nodes based on the memory access.

Hence, it is possible to effectively utilize advantageous features of both the SMP and the ccNUMA.

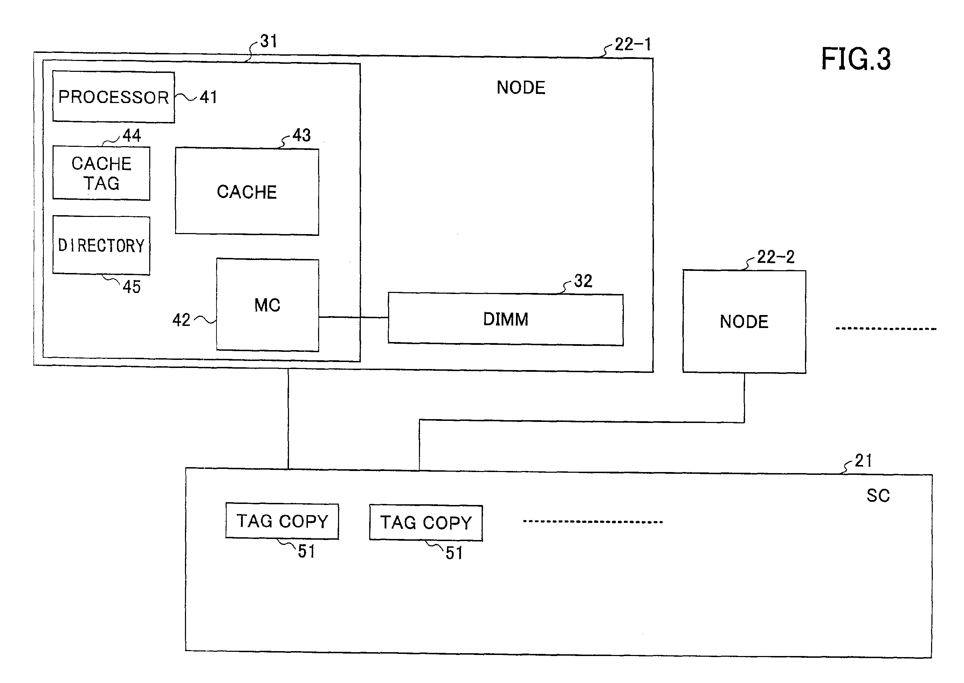

A description will now be given of the memory access method and the information processing apparatus in each embodiment according to the present invention, by referring to FIG. 3 and the subsequent figures.

### EMBODIMENTS

FIG. 3 is a block diagram illustrating an example of a multi-processor system in an embodiment. The multi-processor system illustrated in FIG. 3 includes a system controller (SC) 21, and a plurality of nodes 22-1, 22-2, ..., and 22-n (n is a natural number greater than or equal to 2). The system controller 21 and the plurality of nodes 22-1, 22-2, ..., and 22-n are connected via a suitable connecting part or means. This suitable connecting part or means is not limited to a particular part, and may be formed by a known part. The system controller 21 includes a plurality of tag copies 51 which will be described later, and functions as a memory control unit. Each of the nodes 22-1, 22-2, ..., and 22-n has the same structure, and thus, FIG. 3 only illustrates the structure of the node 22-1. The node 22-1 includes a core 31 and a main memory (DIMM: Dual Inline Memory Module) 32 that forms a primary storage. The core 31 includes a processor 41 formed by a CPU (Central Processing Unit) or the like, a memory controller (MC) 42, a cache memory (hereinafter simply referred to as a cache) 43 that forms a secondary memory or storage, a cache tag 44, and a directory 45. The number of processors 41 within the core 31 is not limited to one.

Each of the nodes 22-1, 22-2, ..., and 22-n may function as a local node, a home node, and an owner node of a known multi-processor system employing the ccNUMA. Each of the nodes 22-1, 22-2, ..., and 22-n at least used as the local node does not need to be physically implemented at one physical location as in the case of one chip, for example, and the DIMM 32 and the directory 45 may be connected beyond the system controller 21, that is, arranged on an opposite end from the processor 41 and the cache 43. A DIMM space (main memory space) existing in the entire multi-processor system needs to be a shared memory space in which the cache coherency is maintained.

The system controller 21 includes a processor, and a memory to store the tag copies 51, and may have a structure similar to that of each of the nodes 22-1, 22-2, ..., and 22-n. The system controller 21 stores the tag copies 51 of the cache tags 44 included in each of the nodes 22-1, 22-2, ..., and 22-n. As will be described later, there are cases where the tag copy 51 may not be a perfect copy of the cache tag 44. The tag copy 51 may basically have the same function as that used in the known multi-processor system employing the SMP.

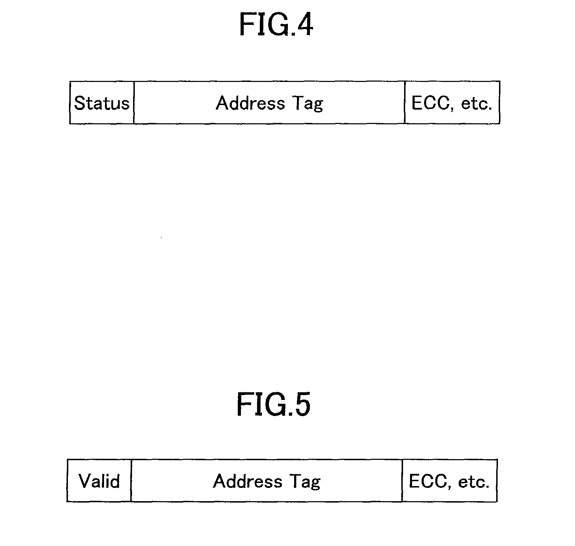

FIG. 4 is a diagram for explaining an example of entries of the tag copy 51. As illustrated in FIG. 4, the entries of the tag copy 51 include a status to indicate a state of the cache 44, an address tag to relate address blocks, an ECC (Error Correction Code), and the like. The status may also function as valid information indicating whether the tag copy 51 is valid.

In the case where the system controller 21 has the same structure as each of the nodes 22-1, 22-2, ..., and 22-n, the structure of the multi-processor system illustrated in FIG. 3 becomes the same as the known multi-processor system employing the ccNUMA, except for the tag copies 51 existing in the system controller 21. However, as will be described later, the control of the multi-processor system illustrated in FIG. 3 slightly differ from the control of the known multi-processor system employing the ccNUMA.

FIG. 5 is a diagram for explaining an example of entries of the directory 45. The entries of the directory 45 are similar to the entries of the cache tag 44. As illustrated in FIG. 5, the entries of the directory 45 include a status that includes an address as a key (index information), an address tag to relate the address blocks, an ECC (Error Correction Code), and the like. The status of the directory 45 indicates whether the directory 45 is valid. Each entry of the directory 45 may be updated or updatable.

A capacity of the directory 45 may enable storage of a maximum state that has a possibility of being taken outside from a node (for example, the node 22-1) to which the directory 45 belongs. Accordingly, in this example, the capacity of the directory is set to satisfy a total capacity of the caches 43 of the remote nodes 22-2 through 22-n other than the local node 22-1 that are connected in the multi-processor system, and to provide a sufficient number of sets in the case of the caches 43 employing the set associative system.

For example, if the number n of the nodes in the multi-processor system is 4, each of the nodes 22-1 through 22-4 includes the cache 43 having a 1-Mbyte (MB) 2-way structure, and each cache 43 has a line size of 64 bytes, the directory 45 within each of the nodes 22-1 through 22-4 needs to have a capacity sufficient to cover 4 x 1 (MB). In this case, the number of ways is 4 x 2 = 8 ways to form a 8-way structure.

In a case where the directory 45 has the entry structure illustrated in FIG. 4, the address tag includes 32 bits, and the status (valid), the ECC and the like require 8 bits, 5 bytes are required per entry. Since a number of entries amounting to 4 MB, that is, [4 MB]/64 = 65536 entries are required, the directory 45 requires a capacity of 327680 bytes (approximately 330 KB). This capacity of the directory 45 is smaller than the capacity of the cache 43 of each of the nodes 22-1 through 22-4, which is 1 MB, the directory 45 may be implemented within the system controller 21.

However, in the case of a large-scale multi-processor system (or shared memory system) in which the number n of the nodes 22-1 through 22-n is extremely large or, the capacity of the cache 43 of each of the nodes 22-1 through 22-n is large, it may be difficult to secure within one node 22-1, for example, the capacity corresponding to a total of the capacities of the caches 43 of each of the other nodes 22-2 through 22-n. In this case, at least a portion of the directory 45 may be stored in an external memory. In this case, because it takes a relatively long time to access the external memory of one node 22-1, for example, the access time may be reduced by simultaneously employing a cache system for the directory 45 when at least a portion of the directory 45 is stored in the external memory.

The capacity of the directory 45 is sufficient as long as it is possible to indicate the cache capacity of the remote node. Hence, as done in the general multi-processor system employing the ccNUMA, the directory information may be stored in the DIMM 32 or, the directory information may be stored in a small-capacity high-speed RAM or the like in a manner similar to the cache tag 44. In the latter case where the directory information is stored in the RAM or the like enabling a high-speed access, it is possible to judge at a high speed whether the access is a local access or a remote access.

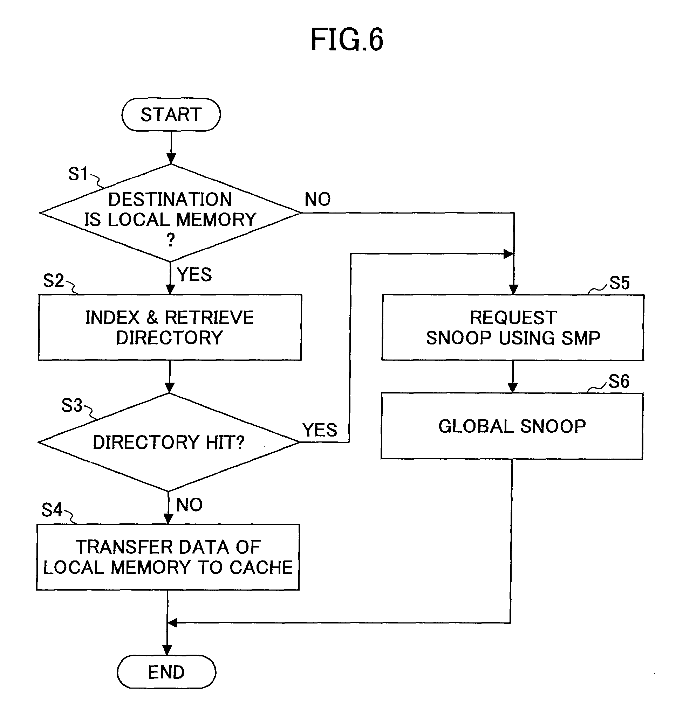

FIG. 6 is a flow chart for explaining a memory access control. When a memory access (that is, a remote access) is made from the processor of the remote node, the directory 45 stores the takeout information indicating that the data requested by the memory access has been taken out to the cache of the remote node. The memory access control is performed by the following manner using this directory 45.

For example, in the case of a memory access (that is, a local access) from the processor 41 of the local node 22-1, the directory 45 is indexed and retrieved when the cache miss occurs at the address requested by the local access. If the takeout information is not stored in the directory 45, the data is read from the local memory, that is, the DIMM 32 within the local node 22-1, in order to perform the memory access to the local memory at a high speed.

On the other hand, in cases other than the above, the global snoop process similar to that performed by the known multi-processor system employing the SMP is performed, without using the directory 45, in order to compensate for the slow copy-back of the ccNUMA. In other words, by performing an operation similar to that performed by the known multi-processor system employing the SMP, a flat (uniform) access may be made with respect to the memory and the cache according to the SMP, and the slow copy-back may be avoided. The "cases other than the above" refer to cases where the memory access (that is, remote access) is made from the processor 41 of the remote node 22-n or, the takeout information is stored in the directory 45 when the cache miss occurs at the address requested by the local access and the indexing and retrieval of the directory 45 occurs, for example.

The process illustrated in FIG. 6 is started when the memory access (that is, local access) is made from the processor 41 of the local node 22-1, for example, and the cache miss occurs at the address requested by the local access. A step S1 judges whether the destination of the memory access is the local memory (that is, the DIMM 32 of the local node 22-1). If the judgement result in the step S1 is YES, a step S2 indexes and retrieves the directory 45 of the local node 22-1. A step S3 judges whether a directory hit occurred. If the judgement result in the step S3 is NO, a step S4 transfers the data in the DIMM 32 (local memory) of the local node 22-1 to the cache 43 of the same local node 22-1, and the process ends.

On the other hand, if the judgement result in the step S1 is NO or, if the judgement result in the step S3 is YES, a step S5 requests a global snoop process similar to that of the known multi-processor system employing the SMP, with respect to the processor 41 of the local node 22-1. A step S6 performs the global snoop process similar to that of the known multi-processor system employing the SMP, and the process ends.

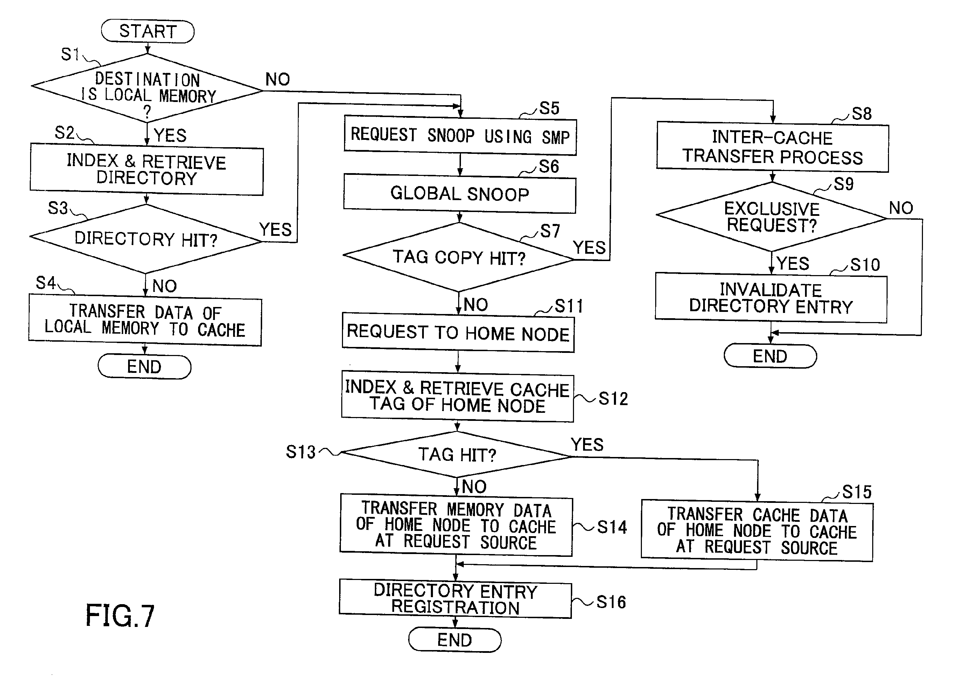

FIG. 7 is a flow chart for explaining an example of an operation of the multi-processor system. In FIG. 7, those steps that are the same as those corresponding steps in FIG. 6 are designated by the same reference numerals, and a description thereof will be omitted.

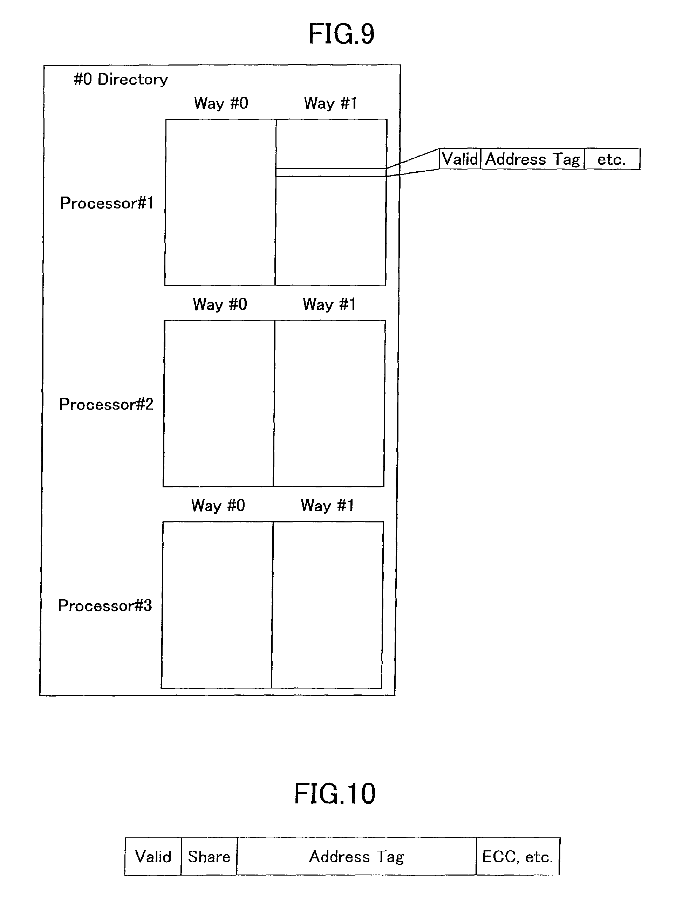

In FIG. 7, after the step S6, a step S7 judges whether a hit to the tag copy 51 within the system controller 21 occurred. If the judgement result in the step S7 is YES, a step S8 performs an inter-cache transfer process in which the data requested by the memory access is transferred to the cache 43 of the local node 22-1 from the cache 43 of the remote (or owner) node 22-3 including the cache tag 44 that is the source of the tag copy 51 to which the hit occurred, for example. A step S9 judges whether the memory access is an exclusive request, and the process ends if the judgement result is NO. It is possible judge whether the memory access is the exclusive request using a share bit of the directory 45 which will be described later in conjunction with FIG. 10. If the judgement result in the step S9 is YES, a step S10 invalidates (or deletes) the entries of the directory 45 in the local node 22-1, and the process ends.

On the other hand, if the judgement result in the step S7 is NO, a step S11 requests a memory access to the home node 22-2, for example, and a step S12 indexes and retrieves the cache tag of the home node 22-2. A step S13 judges whether a hit to the cache tag 44 of the home node 22-2 occurred, and the process advances to a step S15 if the judgement result is NO, while the process advances to a step S15 if the judgement result is YES. The step S14 transfers the data in the DIMM 32 of the home node 22-2 to the cache 43 of the local node 22-1 at the request source. The step S15 transfers the data in the cache 43 of the home node 22-2 to the cache 43 of the local node 22-1 at the request source. After the step S14 or S15, a step S16 performs a directory entry registration in which the takeout information indicating that the data requested by the memory access has been taken out to the cache 43 of the local node 22-1 is stored in the entry of the directory 45 of the home node 22-2, and the process ends.

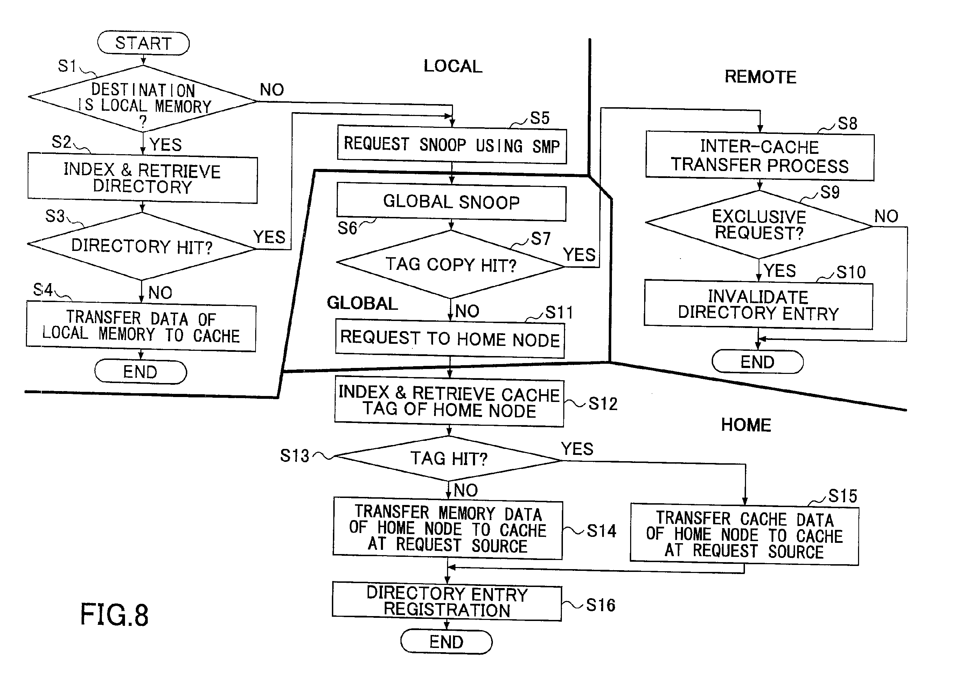

FIG. 8 is a flow chart for explaining an example of the operation of each part of the multi-processor system. In FIG. 8, those steps that are the same as those corresponding steps in FIG. 7 are designated by the same reference numerals, and a description thereof will be omitted.

In FIG. 8, the steps S1 through S5 labeled "LOCAL" perform a process corresponding to the process performed by the local node of the known multi-processor system employing the ccNUMA. The steps S6, S7, and S11 labeled "GLOBAL" perform a process corresponding to the global snoop process performed by the known multi-processor system employing the SMP. The steps S8 through S10 labeled "REMOTE" perform a process performed by the remote (or owner) node of the known multi-processor system employing the ccNUMA. The steps S12 through S16 labeled "HOME" perform a process performed by the home node of the known multi-processor system employing the ccNUMA.

Hence, based on the address of the cache miss, the directory of the local node is indexed and retrieved at the time of the cache miss if the memory storing the data requested by the memory access is the local memory (DIMM), and the data is acquired from the local memory if the directory miss occurs.

If the directory hit occurs, the cache of another node (remote node) has taken out the data at the address block requested by the memory access. Hence, the global snoop process similar to that of the known multi-processor system employing the SMP is performed to cope with the situation by finding out the cache that has taken out the requested data. This method itself of coping with the situation by the global snoop process is known.

In a case where the memory access with the cache miss is a load miss of a shared request, the cache of the remote node that has taken out the data continues to store the data. In this case, the directory information is not modified.

On the other hand, in a case where the request with the cache miss is a store miss of an exclusive request, the cache of the local node will claim an exclusive right, and thus, the entries in the directory of the local node related to the cache of the remote node that has taken out the data are invalidated (or deleted) when the data stored in the cache of this remote node is transferred to the cache of the local node. In other words, the takeout information related to the directory of the local node is invalidated (or deleted) because the data is no longer taken out by nodes other than the local node that includes the cache storing the data.

In a case where the memory access requests the data stored in the remote node and not the local node, it is possible to cope with the situation by performing the global snoop process similar to that performed by the known multi-processor system employing the SMP. If it is found as a result of the global snoop process that the cache of none of the nodes stores the requested data, the data is taken out from the DIMM of the owner node, and hence, the takeout information is stored in the directory of the owner node. When the taken out state of the data is eliminated by a cache replace (or erase) operation, such as the write-back to the memory of the remote node, the takeout information in the directory of the owner node is invalidated (or erased).

If a directory miss occurs when the local memory access is performed and the directory is indexed and retrieved, the process is completed within the local node if the data has not been taken out. For this reason, the tag copy used by the global snoop process similar to that performed by the known multi-processor system employing the SMP cannot observe the activities within the local node. In other words, unlike the tag copy used by the known multi-processor system employing the SMP, the tag copy in this embodiment may not store complete information. Accordingly, the copy-back from the home node may not be distinguished from the memory read of the home node. However, in a case where the observation indicates that the data requested by the memory access is not stored in the cache of any of the nodes as a result of the global snoop process, it may be regarded as a memory read and an inquiry may be made to the home node in order to index and retrieve the cache tag of the home node.

In a case where a bus snoop type SMP, that does not use a tag copy, is employed, the cache tag of the local node is constantly indexed and retrieved. For this reason, the activities within the local node may always be observed, and the tag copy includes the complete information.

FIG. 9 is a diagram for explaining a directory forming method to form the directory 45. FIG. 9 illustrates the directory forming method for the directory 45 for a node number #0 (that is, the node including the processor 41 having a processor number #0), for example. Information of the processors 41 having the processor numbers #1 through #3 are denoted by Processor#1 through Processor#3. In this example, each node has three other nodes other than itself, and thus, each node has three caches 43 other than its own cache 43. Each cache 43 is formed by a 2-way set associative cache with a capacity of 1 MB. Accordingly, an arbitrary takeout state may be stored by providing 8192 (=[1 MB]/[64]/[2]) entries per 1-way, for the 2-way of each of the three nodes.

The address, the node number, and the way number is required in order to specify the location where the information is registered in the directory 45. The address, the node number, and the way number are also required when registering the tag copy of the SMP, and thus, this embodiment requires no additional information to specify the location where the information is registered in the directory 45. However, the process number and the way number need to be transferred to the home node when making the request to the home node by the remote access.

When the directory 45 is formed as illustrated in FIG. 9, and the data taken out by the cache 43 is replaced to the original cache 43 and the data taken out to the cache 43 is erased (or the taken out state of the data is cancelled), the entries of the directory 45 may easily be erased by transferring the erased address, the way number, and the node number to the original home node from which the data was taken out.

Therefore, according to this embodiment, the local access may realize a short latency and a high throughput equivalent to those of the ccNUMA. In addition, the remote access may realize a stable latency, that is, a flat (uniform) memory access comparable to the SMP. For this reason, it is possible to realize a high-performance multi-processor system and a high-performance shared memory system.

A modification of the above described embodiment may be made within a range keeping the restrictions on the cache coherency.

In the modification described hereunder, the directory 45 stores information that may distinguish whether the data that has been taken out was responsive to an exclusive or shared request that is a clean request. When the load miss of the cache 43 in the local node occurs, it is possible to discriminate the shared and clean directory hit by indexing and retrieving the directory 45. In this case, even though the data has been taken out (or the directory hit occurred), the requested data may be acquired from the local memory without having to perform the global snoop process similar to that performed by the known multi-processor system employing the SMP.

FIG. 10 is a diagram for explaining another example of the entries of the directory. In FIG. 10, those parts that are the same as those corresponding parts in FIG. 5 are designated by the same reference numerals, and a description thereof will be omitted. In this modification, the entries of the directory 45 further include the shared bit. The shared bit is an example of the information that distinguishes whether the data that has been taken out was responsive to an exclusive or shared request that is a clean request. If the share bit is ON, it is indicated that the data was taken out responsive to the shared clean request. On the other hand, if the share bit is OFF, it is indicated that the data was taken out responsive to the exclusive request.

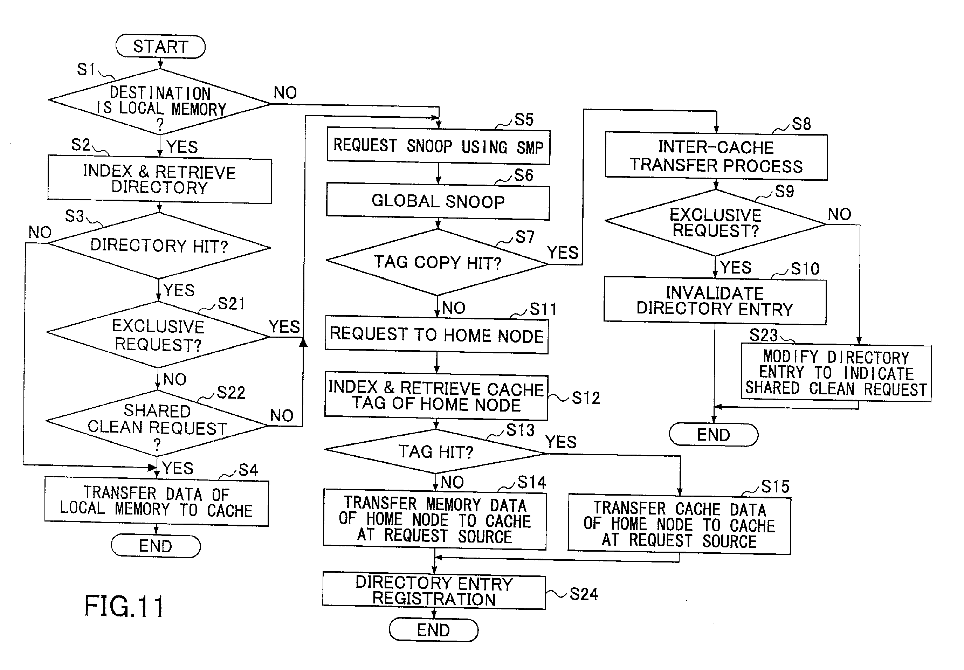

FIG. 11 is a flow chart for explaining another example of the operation of the multi-processor system. In FIG. 11, those steps that are the same as those corresponding steps in FIG. 7 are designated by the same reference numerals, and a description thereof will be omitted.

In FIG. 11, if the judgement result in the step S3 is YES, a step S21 indexes and retrieves the share bit of the directory 45 to judge whether the memory access request is exclusive. If the judgement result in the step S21 is NO, a step S22 indexes and retrieves the share bit of the directory 45 to judge whether the memory access request is a shared clean request. The process advances to the step S4 if the judgement result in the step S22 is YES. The process advances to the step S5 if the judgement result in the step S21 is YES or, if the judgement result in the step S22 is NO.

If the judgement result in the step S9 is NO, a step 23 modifies the share bit in the entry of the directory 45 to indicate the shared clean request, if the share bit does not indicate the shared clean request, and the process ends.

After the step S14 or S15, the process advances to a step S24. The step S24 performs a directory entry registration in which takeout information, indicating that the data requested by the memory access has been taken out to the cache 43 of the local node 22-1, is stored in the entry of the directory 45 of the home node 22-2, and the process ends. The directory entry registration performs a shared registration which registers in the entry of the directory 45 the share bit indicating the shared clean request, if the memory access request is judged as being the shared clean request.

Accordingly, when the load miss of the cache 43 (that is, a cache miss of the shared memory request) of the local node occurs, the directory 45 is indexed and retrieved in order to acquire the data from the local memory, without performing the global snoop process employing the SMP, if the share bit is ON even when the directory hit occurs. In addition, if the load miss (that is, a cache miss of the shared memory request) occurs and the data is to be acquired from the remote memory, the share bit may be turned ON when modifying or registering the information in the entry of the directory 45 during a process of transferring the data of the remote memory, for example.

### INDUSTRIAL APPLICABILITY

The information processing apparatus and the memory access method of the information processing apparatus may be applied to multi-processor systems and shared memory systems in which the cache coherency is to be maintained.

The disclosed information processing apparatus and the memory access method of the information processing apparatus are described above by way of embodiments, however, the disclosed information processing apparatus and the memory access method of the information processing apparatus are not limited to the above embodiments, and various variations and modifications may be made without departing from the scope of the present invention.

## Claims

1. A memory access method to maintain data consistency in an information processing apparatus in which a plurality of nodes are coupled, wherein each node includes a processor, a main memory, and a secondary memory, the memory access method comprising:
storing takeout information indicating that data of the node is taken out to the secondary memory of another node in a directory of each node;
judging by a node whether a destination of the memory access is the main memory or a secondary memory of the node when a cache miss occurs during a memory access to the secondary memory of the node;
judging by the node whether a directory hit occurs by indexing and retrieving the directory thereof when the node judges that the destination of the memory access is the main memory or the secondary memory of the node;
performing a memory access by the node based on the memory access when the node judges that no directory hit occurs; and
performing a global snoop process by the node to make a snoop with respect to all of the plurality of nodes with respect to the other nodes based on the memory access when the node judges that the destination of the memory access is not the main memory nor the secondary memory of the node or when the node judges that the directory hit occurs.

2. The memory access method as claimed in claim 1, wherein the performing the global snoop process performs the global snoop process after indexing and retrieving a tag copy of the one node when the one node judges that a directory hit occurs.

3. The memory access method as claimed in claim 2, wherein the tag copy is stored within an arbitrary one of the plurality of nodes.

4. The memory access method as claimed in claim 1, wherein the performing the memory access by the one node loads data in the main memory or the secondary memory of the one node when the one node judges that no directory hit occurs.

5. The memory access method as claimed in claim 1, wherein the directory is stored in the main memory within each of the plurality of nodes.

6. The memory access method as claimed in claim 1, wherein the directory is stored in a memory other than the main memory within each of the plurality of nodes.

7. The memory access method as claimed in claim 1, wherein the directory is stored in a main memory and an external memory other than the main memory within each of the plurality of nodes.

8. The memory access method as claimed in claim 1, wherein
the directory includes a number of updatable entries sufficient to cover a capacity of the secondary memory of all of the plurality of nodes other than the one node, within each of the plurality of nodes, and
the entries include a status that includes an address as index information, an address tag to relate address blocks, and an error correction code, and the status indicates whether the directory is valid or invalid.

9. The memory access method as claimed in claim 1, further comprising:
invalidating the takeout information of the directory in each node when a takeout state in which the data is taken out from the one node to the secondary memory of another node is cancelled.

10. The memory access method as claimed in claim 2, wherein the performing the global snoop process indexes and retrieves tag information of a management node when the one node judges that the data requested by the memory access is not stored in the secondary memory of a node other than the management node which manages the information processing apparatus.

11. The memory access method as claimed in claim 10, further comprising:
registering the takeout information in a directory of the management node when the data is transferred from the management node to the secondary memory of the one node.

12. The memory access method as claimed in claim 10, wherein the directory includes share information to distinguish whether the data that is taken out is responsive to an exclusive or shared request, and the memory access method further comprises:
acquiring the data from the main memory of the one node if the one node judges that the directory hit occurs and that the data that is taken out is responsive to the shared request based on the share information retrieved by indexing the directory; and
invalidating the takeout information in the directory of the management node if a data transfer occurs between the secondary memories due to an exclusive copy-back and the one node judges that the data that is taken out is responsive to the exclusive request based on the share information retrieved by indexing the directory.

13. An information processing apparatus configured to maintain data consistency, comprising:
a plurality of nodes each including a processor, a main memory, and a secondary memory; and
a memory control unit coupled to the plurality of nodes,
wherein each of the plurality of nodes includes a directory configured to store takeout information indicating that data of the node is taken out to the secondary memory of another node,
wherein the processor of a node includes:
a first judging portion configured to judge whether a destination of the memory access is the main memory or the secondary memory of the node when a cache miss occurs during a memory access to the secondary memory of the node;
a second judging portion configured to judge whether a directory hit occurs by indexing and retrieving the directory thereof when the one node judges that the destination of the memory access is the main memory or the secondary memory of the one node;
an access portion configured to perform a memory access based on the memory access when the second judging portion judges that no directory hit occurs; and
a snoop process portion configured to perform a global snoop process to make a snoop with respect to all of the plurality of nodes with respect to the other nodes based on the memory access when the first judging portion judges that the destination of the memory access is not the main memory nor the secondary memory of the one node or, the second judging portion judges that the directory hit occurs.

14. The information processing apparatus as claimed in claim 13, wherein the snoop process portion performs the global snoop process after indexing and retrieving a tag copy of the one node when the second judging portion judges that a directory hit occurs.

15. The information processing apparatus as claimed in claim 14, wherein the memory of the memory control unit stores the tag copy.

16. The information processing apparatus as claimed in claim 13, wherein the directory is stored in one of the main memory within each of the plurality of nodes, a main memory other than the main memory within each of the plurality of nodes, and an external memory other than the main memory within each of the plurality of nodes.

17. The information processing apparatus as claimed in claim 13, wherein
the directory includes a number of updatable entries sufficient to cover a capacity of the secondary memory of all of the plurality of nodes other than the one node, within an arbitrary one of the plurality of nodes, and
the entries include a status that includes an address as index information, an address tag to relate address blocks, and an error correction code, and the status indicates whether the directory is valid or invalid.

18. The information processing apparatus as claimed in claim 13, further comprising:
an invalidating portion configured to invalidate the takeout information of the directory when a takeout state in which the data is taken out from the one node to the secondary memory of another node is cancelled.

19. The information processing apparatus as claimed in claim 14, wherein the snoop process portion indexes and retrieves tag information of a management node when the snoop process portion judges that the data requested by the memory access is not stored in the secondary memory of a node other than the management node which manages the information processing apparatus.

20. The information processing apparatus as claimed in claim 19, wherein
the directory includes share information to distinguish whether the data that is taken out is responsive to an exclusive or shared request, and the processor of the one node further includes:
an acquiring portion configured to acquire the data from the main memory of the one node if the second judging portion judges that the directory hit occurs and the acquiring portion judges that the data that is taken out is responsive to the shared request based on the share information retrieved by indexing the directory; and
an invalidating portion configured to invalidate the takeout information in the directory of the management node when a data transfer occurs between the secondary memories due to an exclusive copy-back and when the invalidating portion judges that the data that is taken out is responsive to the exclusive request based on the share information retrieved by indexing the directory.
